# EUROPÄISCHE PATENTANMELDUNG

(11) **EP 1 480 308 A2**
(43) Veröffentlichungstag der Anmeldung: **24.11.2004**
(21) Anmeldenummer: 04010714.6
(22) Anmeldetag: 05.05.2004
(51) Int. Cl.: H02G 1/12

(54) **Verfahren und Vorrichtung zum Abisolieren von Flachbandleitern**

(30) Priorität: 23.05.2003 DE 10323495
(71) Anmelder: Firma Amrein, 8645 Jona (CH)
(72) Erfinder: Amrein, Alois, 8645 Jona (CH)
(74) Vertreter: Schütz, Peter, Dipl.-Ing.

(57) **Zusammenfassung**

Bei einem Verfahren und einer Vorrichtung zum Abisolieren von Flachbandleitern wird das Isoliermaterial durch ein Abtragwerkzeug mit einer aktiven Arbeitsfläche geringerer Härte als diejenige des metallischen Leitermaterials entfernt, womit Beschädigungen der Leiter durch das Abtragwerkzeug ausgeschlossen werden.

## Beschreibung

Die Erfindung betrifft eine Vorrichtung zum Abisolieren von Flachbandleitern mit den im Oberbegriff des Anspruchs 1 vorausgesetzten Merkmalen, sowie ein Abisolierverfahren.

Aus der US 6 523 251 B2 ist eine Abisoliervorrichtung für Flachbandleiter, bei denen mehrere flache Leiter nebeneinander in einem Isoliermaterial eingebettet sind, bekannt, welche mit einem Fräser arbeitet, der über den Flachbandleiter geführt wird und dabei die Isolierung unter Freilegung der Leiter wegfräst. Ein gleiches Verfahren ist aus der WO 01/99250 A1 bekannt. Ferner ist es aus der US 4 597 176 bekannt, die Isolierung von Flachbandleitern bis zum Freilegen der metallischen Leiter abzuschleifen. Bei diesen Fräs- und Schleifverfahren ist eine sehr sorgfältige Einstellung des Werkzeugs erforderlich, damit die metallischen Leiter nicht beschädigt werden.

Aus der DE 100 17 036 A1 ist es bekannt, Leiterbahnen in vollisolierten Flachleiter-Bandkabeln partiell durch Abschälen mit Hilfe eines Schälwerkzeugs freizulegen und anschließend den abgeschälten Span abzutrennen. Ein Abschälen der Isolierung zur Freilegung der metallischen Leiter eines Flachbandkabels mit Hilfe einer meißelähnlichen Klinge ist ferner aus der GB 1 209 311 bekannt. Schließlich ist aus der US 3 385 140 noch das Abkratzen der Isolierung mit Hilfe eines Glasfaser-Bürstenrades bekannt.

Bei all diesen Verfahren ist eine sehr genaue Einstellung des Abtragwerkzeugs bezüglich der Abtragtiefe erforderlich und dennoch besteht die Gefahr einer Beschädigung der flachen Kupferleiter, was insbesondere bei verzinnten Leitern nachteilig ist, wenn mit der Isolierung auch die Verzinnung entfernt wird.

Ferner ist es aus der DE-OS 23 27 620 bekannt, schwach leitende extrudierte Schichten aus einem thermoplastischen oder thermoelastischen Kunststoff oder einem Elastomer, welche auf der Isolierung elektrischer Kabel angeordnet und mit dieser vernetzt sind, durch Anlösen mit Hilfe eines organischen Lösungsmittels aufzuweichen und dann durch Reibung zu entfernen. Das Aufbringen des Lösungsmittels erfolgt mit Hilfe eines um das Kabel herumgewickelten Filzstreifens, der mit dem Lösungsmittel getränkt ist und auf den an denjenigen Stellen Druck ausgeübt wird, wo die Reibungskräfte erzeugt werden sollen.

Der Erfindung liegt die Aufgabe zugrunde, ein Verfahren und eine Vorrichtung zum Entfernen der Kunststoffisolierung von Flachbandleitern zu schaffen, welche eine gründliche Entfernung der Isolierung ohne Gefahr einer Beschädigung der metallischen, in der Regel Kupfer-Leiter, insbesondere auch deren Verzinnung, erlauben.

Diese Aufgabe wird durch die im Anspruch 1 bzw. Anspruch 15 angegebenen Merkmale gelöst. Weiterbildungen der Erfindung sind in den Unteransprüchen gekennzeichnet.

Im Gegensatz zu der bisher üblichen Verwendung von Fräsern, Schleifscheiben oder -bändern verwendet die Erfindung zum Abtragen der Isolierung ein Werkzeug aus einem relativ weichen Material, dessen Härte geringer ist als die Härte des Leitermaterials. Wenn das Werkzeug nach dem Entfernen der Isolierung dann auf die härteren Leiter trifft, kann es diese nicht beschädigen. Dies gilt auch für eine Verzinnung der Leiter. Eine kritische Justierung des Werkzeugs oder eines Anschlages ist dabei nicht erforderlich.

Eine Variante der Erfindung besteht darin, die Kunststoffisolierung nicht mehr oder weniger feinteilig abzuspanen, sondern durch Erwärmung so weit zu erweichen, dass sie von den metallischen Leitern abgewischt werden kann. Dies ist ein besonders schonendes Verfahren, bei welchem die empfindlichen Kupferleiter keinerlei mechanischen Beanspruchung ausgesetzt sind. Die Erweichungstemperatur des Kunststoffmaterials der Isolierung wird vorzugsweise mittels Reibungswärme erzeugt, wobei eine Reibfläche in Form eines umlaufenden Bandes oder einer rotierenden Scheibe aus geeignetem Material, z.B. Leder, unter Druckausübung über die abzuisolierende Stelle des Flachbandkabels bewegt wird.

Bei einem Ausführungsbeispiel der Erfindung läuft ein endloses mit relativ weichen Partikeln, z.B. Kunststoffschrot oder auch Naturschrot, beschichtetes Band über Überlenkwalzen, und mit Hilfe einer Andruckvorrichtung wird das Flachbandkabel gegen eine dieser Walzen gedrückt, wobei das über den Walzenumfang herumgeführte Band das Isoliermaterial bis auf die Leiter abträgt, ohne diese beschädigen zu können. Dabei ist keine exakte Einstellung der Abtragtiefe erforderlich. Im Falle eines Lederriemens reibt dieser auf dem Isoliermaterial und erwärmt es durch die Reibung bis zum Erweichen. Statt des um die Walze herumgeführten Bandes kann die Walze oder Scheibe auch mit Kunststoffschrot beschichtet oder mit einer Umhüllung aus Leder oder einem vergleichbar geeignetem Material umkleidet werden. Das abgetragene Isoliermaterial wird vom Riemen, Band oder der Walze bzw. Scheibe gleich mitgenommen, wobei die freigelegte Kabelstelle automatisch gereinigt wird, und von diesem Abtragwerkzeug wird es mit Hilfe einer Abstreifvorrichtung wieder entfernt.

Die Anordnung kann beispielsweise so getroffen werden, dass zum einseitigen Abisolieren der vom Band umschlungenen Walze eine Andruckvorrichtung gegenüberliegt, welche den nötigen Arbeitsdruck zwischen Flachbandkabel und Band erzeugt. Der erforderliche Druck kann federnd eingestellt werden, wobei entweder die Andruckvorrichtung oder die Walze verstellbar angeordnet werden. Zum beiderseitigen Abisolieren können zwei Walzen mit umlaufenden Bändern einander gegenüberliegend angeordnet werden, wobei das Flachbandkabel zwischen ihnen geführt wird. Zur Einstellung des erforderlichen Drucks genügt dann die Verstellbarkeit einer der Walzen. Eine Alternative zum beiderseitigen Abisolieren besteht darin, dass man die beiden Walzen in Längsrichtung des Flachbandleiters gegeneinander versetzt und bei jeder Walze eine eigene Andruckvorrichtung vorsieht. Die Abisolierung auf einer Seite des Bandleiters erfolgt dann mit zeitlichem Versatz gegenüber der Abisolierung auf der anderen Seite, wobei der Bandleiter entsprechend dem Walzenabstand von der ersten Walze zur zweiten Walze weiterbewegt wird, oder man kann die abisolierten Stellen, d.h. Fenster, auf beiden Bandseiten gegeneinander versetzen.

Die Entfernung des vom Band mitgenommenen abgeriebenen erweichten Kunststoffmaterials kann beispielsweise mit einer Hilfe einer Bürste erfolgen, die an geeigneter Stelle angeordnet ist und an der das Band vorbeigeführt wird. Auch andere Abstreifvorrichtungen wie Schaber, Klinge etc. zum Abnehmen des Kunststoffmaterials vom Band oder Riemen sind möglich.

Mit dem erfindungsgemäßen Prinzip lassen sich gleichermaßen die Leiterenden abisolieren wie auch Fenster in der Isolierung ausbilden, bei denen die Leiter an einer gewünschten Stelle im Verlauf des Flachbandkabels freigelegt werden. Zweckmäßigerweise wird der Leiter mit Hilfe von Vorschubwalzenpaaren transportiert und durch geeignete Steuerung mit der abzuisolierenden Stelle in den Bereich der Arbeitsflächen gebracht. Für de Abisolierung der Leiterenden kann ein Anschlag vorgesehen sein, bis zu dem das Bandende transportiert wird und der nach dem Festspannen des Bandes in dieser Position zurückgezogen wird, um das Bandende zum Entfernen der Isolierung freizugeben.

Die Erfindung sei nun anhand von Ausführungsbeispielen näher erläutert. Es zeigen:
- Fig. 1 bis 3: schematische Darstellungen von drei Bearbeitungsphasen zur Erläuterung des Prinzips der Erfindung;
- Fig. 4: eine schematische Darstellung eines Ausführungsbeispiels der Erfindung zur Freilegung eines Fensters im Flachbandleiter;
- Fig. 5: ein anderes Ausführungsbeispiel der Erfindung zur Abisolierung eines Endes des Flachbandleiters;
- Fig. 6: ein Ausführungsbeispiel der Erfindung zur doppelseitigen Abisolierung des Flachbandleiters;
- Fig. 7: ein gegenüber Figur 6 abgewandeltes Ausführungsbeispiel der Erfindung;
- Fig. 8: eine schematische Ansicht einer der Vorrichtung nach Fig. 4 ähnlichen Ausführungsform der Erfindung von einer anderen Seite;
- Fig. 9: ein erfindungsgemäßes Abtragwerkzeug in Form einer Walze; und
- Fig. 10: ein erfindungsgemäßes Abtragwerkzeug in Form eines Bandes.

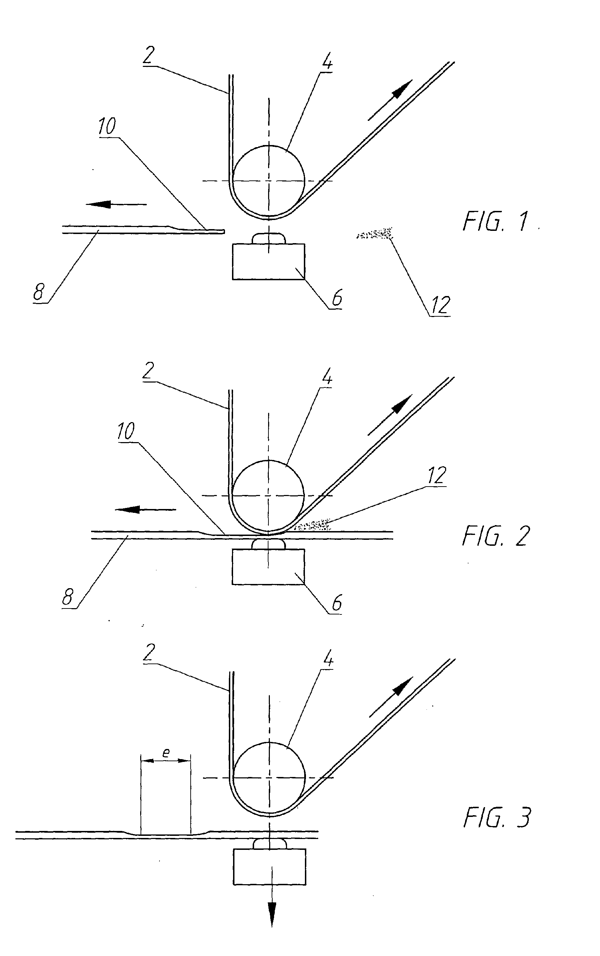

Gemäß Fig. 1 wird ein Band 2 mit relativ weicher Oberfläche, z.B. in Form einer Kunststoffschrot- oder Naturschrotbeschichtung, über eine Umlenkrolle 4 geführt, welcher eine Andruckvorrichtung 6 gegenüberliegt. Zwischen Umlenkrolle 4 und Andruckvorrichtung 6 kann ein Flachbandleiter 8 eingeführt werden, welcher ohne Notwendigkeit einer kritischen Einstellung des Abtragwerkzeugs oder eines Anschlags einfach gegen das laufende Band 2 gedrückt wird, und die dabei entstehende Reibungswärme erweicht das Kunststoffmaterial des Flachbandleiters, das durch das Band 8 von den freigelegten Metallleitern 10 abgewischt und mitgenommen wird. Das entfernte Isoliermaterial ist in Fig. 1 mit 12 bezeichnet. Durch Vorschub in Längsrichtung des Flachbandleiters lässt sich die Länge des abisolierten Bereichs bestimmen.

Gemäß Fig. 2 wird mit der anhand von Fig. 1 beschriebenen Vorrichtung ein Fenster aus dem Flachbandleiter 8 freigelegt, welcher hier nicht am Ende, sondern in einem Abschnitt im Verlauf seiner Länge der Wirkung des Bandes 2 ausgesetzt wird, so dass hier das Kunststoffmaterial erweicht und von den freigelegten Metallleitern weggewischt wird. Je nach Größe des Fensters wird der Flachbandleiter 8 ein entsprechendes Stück in Pfeilrichtung durch die Vorrichtung gezogen, während der Druck zwischen Umlenkrolle 4 und Andruckvorrichtung 6 auf ihn ausgeübt wird. Das Ergebnis ist in Fig. 3 veranschaulicht, wo die Metallleiter in einem Fenster der Länge 1 freigelegt worden sind.

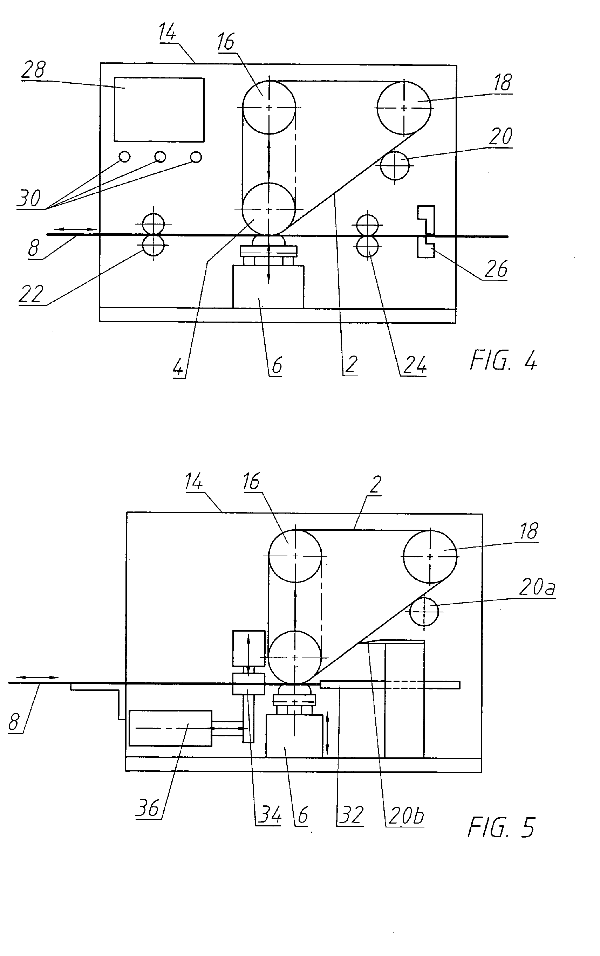

Fig. 4 zeigt schematisch eine in ein Gehäuse 14 eingebaute Abisoliervorrichtung, die nach dem anhand der Figuren 1 bis 3 erläuterten Prinzip arbeitet. Der Doppelpfeil neben der Andruckvorrichtung 6 veranschaulicht deren Bewegung zum Andrücken des Flachbandleiters 8 gegen die Umlenkrolle 6 mit dem Band 2 zur Erzielung des gewünschten Reibdrucks, bzw. zur Freigabe des Flachbandleiters nach dem Abisolieren. Das Band 2 ist über zwei weitere Umlenkrollen 16 und 18 geführt, von denen eine mit einem hier nicht gezeigten Antriebsmotor verbunden sein kann, um das umlaufende Band 2 in die erforderliche Bewegung zu versetzen. Ein Abstreifvorrichtung 20 dient dem Entfernen des mitgenommenen Kunststoffmaterials vom Band 2. Sie kann beispielsweise in Form einer Bürste ausgebildet sind.

Das Band 2 muss nicht notwendigerweise in Form eines Dreiecks geführt werden, wie es die Zeichnungen beispielhaft angeben, sondern es könnte auch nur über die beiden Rollen 4 und 16 geführt werden, wie in Fig. 4 angedeutet ist. Der daneben eingezeichnete Doppelpfeil veranschaulicht die Möglichkeit, den Reibdruck durch Verstellbarkeit der Walzenanordnung anstatt der Andruckvorrichtung 6 zu erzeugen.

Ferner sind in Fig. 4 zwei Vorschubrollen oder Walzenpaare 22, 24 gezeigt, mit Hilfe deren der Flachbandleiter 8 in der Vorschubrichtung bewegt wird, um die Metallleiter in der gewünschten Länge freizulegen. Ferner ist eine Schneidvorrichtung 26 zum Abtrennen von Flachbandleiterstücken gezeigt. Sämtliche Bewegungen können programmgesteuert ausgeführt werden, und mit Hilfe eines Displays 28 und Einstellern 30 kann die Einstellung und Überwachung der gewünschten Parameter erfolgen. Mit Hilfe beispielsweise eines Schlepprades oder sonstigen geeigneten Längenmessers 31 lässt sich ein Steuersignal für die Bestimmung der Abisolierlänge gewinnen.

Fig. 5 zeigt eine Vorrichtung zum Abisolieren von Enden eines Flachbandleiters, wobei ein einstellbarer Längenanschlag 32 vorgesehen ist, an dem das Ende des Flachbandleiters anliegt. Dieser wird in eine Spannvorrichtung 34 eingespannt, deren Spannbewegung durch senkrechte Doppelpfeile angedeutet ist und die in Richtung des waagerechten Doppelpfeils mit Hilfe eines Verschiebungsantriebs 36 in Bandlängsrichtung verschiebbar ist. Hiermit lässt sich das Flachbandkabel über die gewünschte Länge der Abisolierung durch den Reibbereich - programmgesteuert - bewegen.

Die Abstreifvorrichtung für das vom Band 2 mitgenommene Isoliermaterial ist bei diesem Ausführungsbeispiel zweiteilig ausgebildet: Ein Schaber 20b in Form einer Klinge, eines Spachtels oder dgl. entfernt zunächst die Hauptmasse des vom Flachbandleite entfernten Isoliermaterials, und eine nachfolgende Bürste 20a sorgt für die Nachreinigung des Bandes 2. Zweckmäßigerweise kann der Schaber 20b mit dem Längenanschlag 32 kombiniert werden, wie es Fig. 5 zeigt.

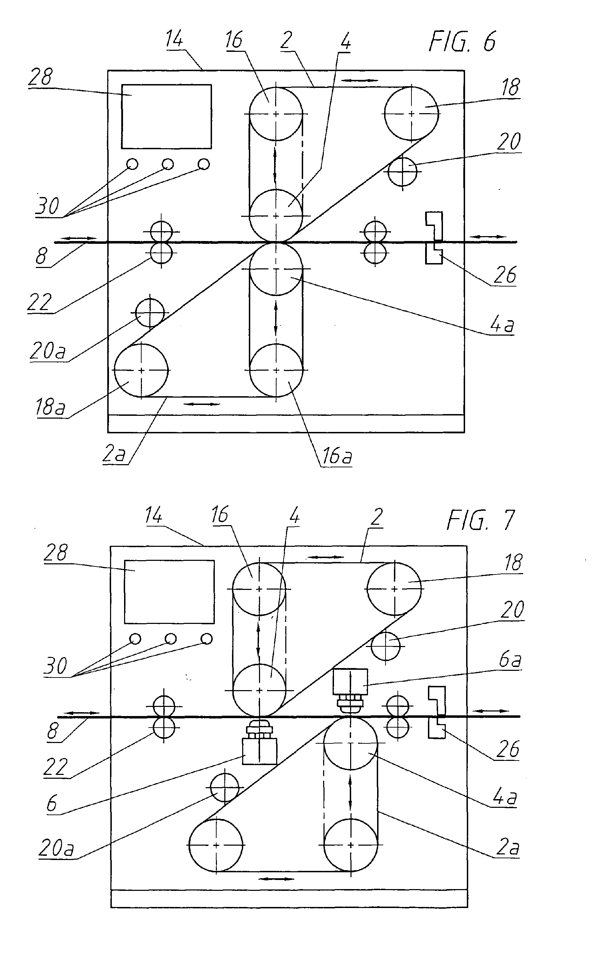

Fig. 6 zeigt eine Ausführungsform zum beiderseitigen Abisolieren eines Flachbandleiters, bei welcher zusätzlich eine weitere Band/Rollen-Anordnung auf der anderen Seite des Flachbandleiters vorgesehen ist. Die Andruckvorrichtung 6 kann hier entfallen, da jeweils eine der Umlenkrollen 4, 4a, als Andruckvorrichtung für die andere wirkt. Die senkrechten Doppelpfeile veranschaulichen die Einstellbarkeit einer oder beider Anordnungen auf den gewünschten Reibdruck. Die Funktionsweise entspricht dem oben bereits Gesagten.

Bei der Anordnung nach Fig. 7, welche ebenfalls ein beiderseitiges Abisolieren erlaubt, sind die beiden Umlenkrollen 4 und 4a in Längsrichtung des Flachbandleiters gegeneinander versetzt, und jeder Rolle ist eine eigene Andruckvorrichtung 6 bzw. 6a zugeordnet. Mit dieser Anordnung kann man die Metallleiter des Flachbandleiters von beiden Seiten her freilegen und gegeneinander versetzte Fenster ausbilden. Für eine dabei zweckmäßige Programmsteuerung sind hierbei wieder ein Display 28 und Einsteller 30 angedeutet.

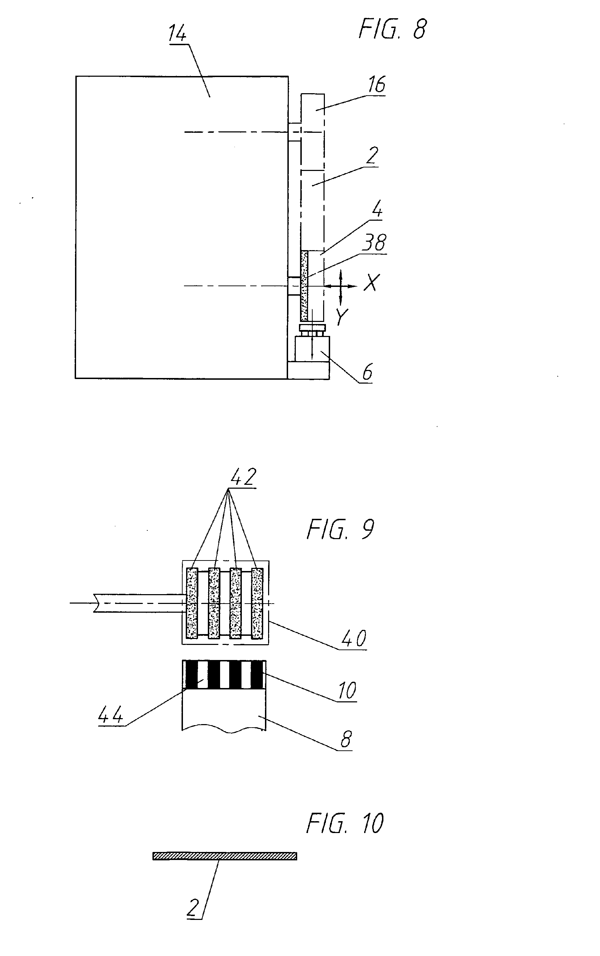

In Fig. 8 ist eine Seitenansicht einer Abisoliervorrichtung dargestellt, welche in etwa derjenigen nach Fig. 4 entspricht und daher mit den gleichen Bezugsziffern versehen ist. Anstelle des über die Rollen 4 und 16 geführten Bandes 2, hier punktiert angedeutet, kann die Abtragung des Isoliermaterials auch mit Hilfe einer Abtragscheibe 38 erfolgen, die im dargestellten Beispiel an ihrem Umfang mit einer Kunststoffschrotbeschichtung versehen ist, welche die Reib- und Abtragwirkung gegenüber beispielsweise einer Lederummantelung der Scheibe noch weiter verbessert. Die Abtragscheibe 38 kann entweder der Gesamtbreite des abzuisolierenden Flachbandleiters entsprechen, oder aber so breit wie ein einzelner Flachleiter sein, um nur einzelne Leiter freizulegen. Die Scheibe kann auch in Richtung des Doppelpfeils X über mehrere Einzelleiter oder über die gesamte Breite des Flachbandleiters verfahren werden, um mehr als einen Leiter freizulegen. Der Doppelpfeil Y deutet eine Höhenverstellbarkeit der Abtragscheibe 38 oder des Bandführungsmechanismus an.

Fig. 9 zeigt eine Ausführung einer Abtragscheibe 40 mit mehreren erhabenen Arbeitsflächen 42, deren Breite der jeweiligen Breite der freizulegenden Flachleiter des darunter abgebildeten Flachbandleiters 8 entspricht. Die zwischen den Leitern befindliche Isolation ist mit 44 bezeichnet. Im dargestellten Ausführungsbeispiel ist die Abtragscheibe 38 bzw. 40 an ihrem Umfang mit Kunststoffschrot beschichtet, wie durch die Punktierung angedeutet. Ein entsprechend mit Kunststoffschrot versehenes Band 2 ist in Fig. 10 veranschaulicht. Anstelle von Kunststoffschrot kann man auch Naturschrot, beispielsweise Maisschrot, verwenden, um die gewünschte Abtragwirkung ohne Beschädigung der dünnen Kupferflachleiter oder deren Verzinnung zu erzielen. Die Dicke der Schrotbeschichtung richtet sich nach der erforderlichen Standzeit des Werkzeugs, welches gewünschtenfalls auch in seinem gesamten Volumen vom Schrot durchsetzt sein kann.

## Patentansprüche

1. Vorrichtung zum Abisolieren von Flachbandleitern mit mehreren parallel nebeneinander in einer Kunststoffisolierung eingebetteten metallischen Leiterbahnen, mit einem Werkzeug zum Abtragen des Kunststoffmaterials der Isolierung unter Freilegung der Leiterbahnen, **dadurch gekennzeichnet, dass** die relativ zu dem Flachbandleiter (8) bewegbare aktive Arbeitsfläche des Abtragwerkzeugs (Band 2) durch ein Material geringerer Härte als diejenige des Leiterbahnmaterials (10) gebildet wird.

2. Vorrichtung nach Anspruch 1, **dadurch gekennzeichnet, dass** die Arbeitsfläche einen Belag aus Kunststoffschrot aufweist.

3. Vorrichtung nach Anspruch 1, **dadurch gekennzeichnet, dass** die Arbeitsfläche eine Reibfläche ist.

4. Vorrichtung nach Anspruch 2 oder 3, **dadurch gekennzeichnet, dass** die Arbeitsfläche durch ein umlaufendes Band (2) gebildet wird.

5. Vorrichtung nach Anspruch 4, **gekennzeichnet durch** eine den Flachbandleiter (8) gegen die Arbeitsfläche drückende Andruckvorrichtung (6).

6. Vorrichtung nach Anspruch 4, **gekennzeichnet durch** eine Abstreifvorrichtung (20,20a,20b) für mitgenommenes Isoliermaterial von der Reibfläche.

7. Vorrichtung nach Anspruch 5, **dadurch gekennzeichnet, dass** die Andruckvorrichtung (6) einer Umlenkwalze (4) des Reibbandes (2) gegenüberliegend angeordnet ist.

8. Vorrichtung nach Anspruch 1, 2 oder 3, **dadurch gekennzeichnet, dass** das Abtragwerkzeug mindestens eine rotierende Scheibe/Walze aufweist.

9. Vorrichtung nach Anspruch 8, **dadurch gekennzeichnet, dass** die Reibfläche aus Leder besteht.

10. Vorrichtung nach einem der vorstehenden Ansprüche, **dadurch gekennzeichnet, dass** das Abtragwerkzeug zwei beiderseits des zwischen ihnen geführten Flachbandleiters (8) angeordnete Abtragflächen (Reibbänder 2,2') aufweist.

11. Vorrichtung nach Anspruch 10, **dadurch gekennzeichnet, dass** die Abtragflächen einander gegenüberliegend angeordnet sind (Fig. 6).

12. Vorrichtung nach Anspruch 10, **dadurch gekennzeichnet, dass** die Abtragflächen in Längsrichtung des Flachbandleiters (8) gegeneinander versetzt angeordnet sind und jeder Abtragfläche eine Andruckvorrichtung (6,6') gegenüberliegt.

13. Vorrichtung nach Anspruch 11 oder 12, **dadurch gekennzeichnet, dass** die Reibflächen durch über Umlenkwalzen (4) laufende Teile des Reibbandes (2) gebildet werden.

14. Vorrichtung nach einem der vorstehenden Ansprüche, **gekennzeichnet durch** eine Spannvorrichtung (34) zum Einspannen des Flachbandleiters (8), einen Verschiebungsantrieb (36) zum Verschieben der Spannvorrichtung (34) in Längsrichtung des Flachbandleiters (8) und einen verstellbaren Längenanschlag (32) für ein abgeschnittenes Ende des Flachbandleiters.

15. Verfahren zum Abisolieren von Flachbandleitern mit mehreren parallel nebeneinander in einer Kunststoffisolierung eingebetteten Metallleiterbahnen, bei welchem das Kunststoffmaterial der Isolierung mit einem Werkzeug partiell so weit abgetragen wird, dass die Leiterbahnen freigelegt werden, **dadurch gekennzeichnet, dass** das Kunststoffmaterial durch Reibung bis zum Erweichen erwärmt und dann abgewischt wird.
